# EUROPEAN PATENT SPECIFICATION

(11) **EP 0 750 124 B1**
(45) Date of publication and mention of the grant of the patent: **17.11.1999**
(21) Application number: 96304608.1
(22) Date of filing: 21.06.1996
(51) Int. Cl.: F16C 25/06, F16C 35/077

(54) **Preload adjustment apparatus and method**
Vorspannungseinstelleinrichtung und Verfahren
Dispositif à réglage de la précharge et procédé

(30) Priority: 21.06.1995 US 381
(43) Date of publication of application: 27.12.1996
(73) Proprietor: THE TORRINGTON COMPANY, Torrington, Connecticut 06790 (US)
(72) Inventor: Jurras, Mark I., III, Canton Center, Connecticut 06020 (US); McMorrow, Brian, Waterbury, Connecticut 06708 (US); Lemoine, Richard L., Harwinton, Connecticut 06791 (US)
(74) Representative: Feakins, Graham Allan

(56) References cited:
- EP-A- 0 362 613
- JP-A- 3 009 116
- US-A- 3 902 084
- US-A- 4 850 719

## Description

This invention relates generally to preloaded bearings as used in spindles, axles or shafts and, more particularly, to a preload adjustment apparatus for use with preloaded bearings.

In order for a machine tool spindle to maintain high accuracy under varying load conditions, the spindle must have a high degree of stiffness. Stiffness is generally obtained by using angular contact ball bearings mounted in pairs such that the bearings are preloaded against each other. That is, a thrust load is applied such that the bearing balls are forced tightly against the raceways.

Preloading the bearings to obtain the required stiffness increases the stresses in the bearings, causing heat generation. This reduces bearing life and limits operating speed. By varying the bearing preload according to need, bearing life and operating speed can be improved. A mechanical apparatus for varying the preload is described in US-A-4,657,412.

Preload can also be varied using a piezoceramic actuator as described in US-A-4,850,719. As disclosed therein, a D.C. potential is applied to interfaces of multiple piezoelectric wafers in response to varying load conditions to control bearing stiffness. However, because current piezoelectric actuator technology produces only small displacements, the ability to compensate for thermal expansion and control stiffness is severely limited.

According to a first aspect of the present invention there is provided a preload adjustment apparatus for use with preloaded bearings mounted within a housing, characterised by a first radial actuating means for selective radial engagement with the housing such that axial movement of the first radial actuating means relative to the housing is prevented; second radial actuating means for selective radial engagement with the housing such that axial movement of the second radial actuating means relative to the housing is prevented; axial actuating means between the first and second radial actuating means for selective expansion and contraction of the axial distance between the first and second radial actuating means; and retention means for maintaining contact between the axial actuating means and the first radial actuating means and the second radial actuating means.

According to a second aspect of the present invention there is provided a method for adjusting the preload of preloaded bearings mounted within a housing, characterised by radially moving a first radial actuating means into engagement with the housing such that axial movement of the first radial actuating means relative to the housing is prevented; changing the axial length of an axial actuating means between the first and a second radial actuating means such that the axial distance between the first and second radial actuating means is changed; radially moving the second radial actuating means into engagement with the housing such that axial movement of the second radial actuating means relative to the housing is prevented; radially moving the first radial actuating means out of engagement with the housing such that axial movement of the first radial actuating means relative to the housing is not prevented; and changing the axial length of the axial actuating means between the first and second radial actuating means such that the axial distance between the first and second radial actuating means is changed.

For a better understanding of the invention and to show how the same may be carried into effect, reference will now be made, by way of example, to the accompanying drawings, in which:-
Fig. 1 is a longitudinal cross-section of portions of a machine tool spindle illustrating a first embodiment of an apparatus for adjusting the preload of preloaded bearings;
Fig. 2 is a transverse cross-section of portions of the machine tool spindle of Fig. 1, as indicated in Fig. 1;
Fig. 3 is a transverse cross-section similar to Fig. 2 but illustrating a second embodiment of the apparatus for adjusting the preload of preloaded bearings;
Figs. 4, 5, 6 and 7 are end views illustrating alternative constructions of the radial actuating means;
Fig. 8 is a longitudinal cross-section of a portion of the radial actuating means of Fig. 7, as indicated in Fig. 7;
Fig. 9 is a longitudinal cross-section of portions of a machine tool spindle illustrating a third embodiment of the apparatus for adjusting the preload of preloaded bearings; and
Fig. 10 is a transverse cross-section of portions of the machine tool spindle of Fig. 9, as indicated in Fig. 9.

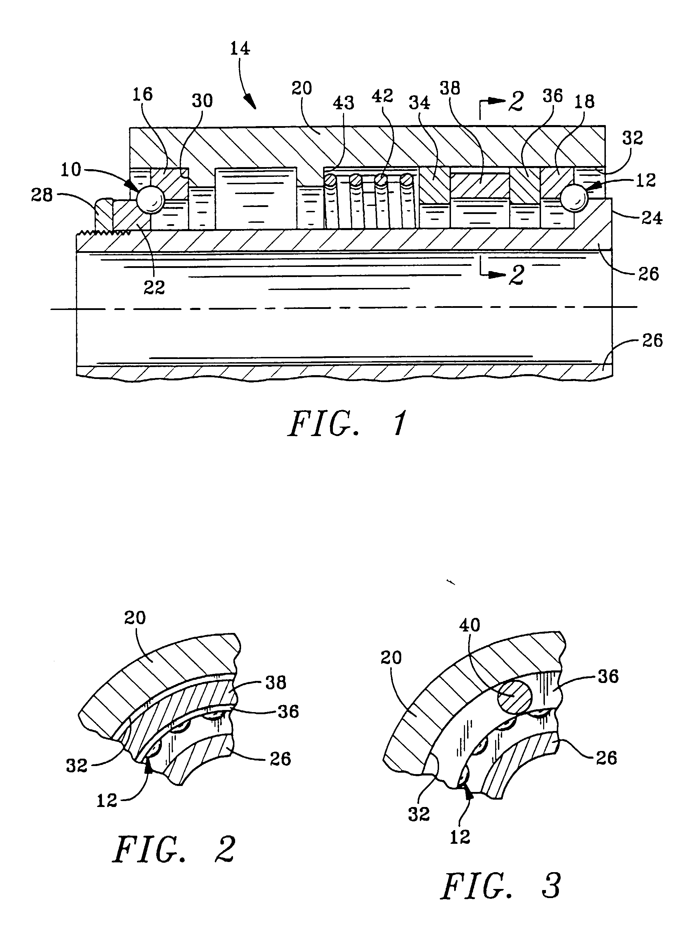

Figure 1 illustrates an apparatus for adjusting the preload of first and second preloaded bearings 10 and 12 mounted within a housing 14 of a machine tool spindle or similar device.

Outer rings 16 and 18 of the preloaded bearings 10 and 12 are mounted on an outer housing member 20 and inner rings 22 and 24 of the preloaded bearings 10 and 12 are mounted on an inner housing member 26. Although other arrangements may be used, the inner ring 24 may be integral with the inner housing member 26 and the inner ring 22 may be retained axially by a threaded collar 28, as shown. In this embodiment, the outer ring 16 is axially restrained by a shoulder 30 and the outer ring 18 is slidably movable with respect to the cylindrical inner surface 32 of the outer housing member 20.

A first radial actuating clamp or means 34 is selectively movable radially to engage the housing 14 such that axial movement of the first radial actuating means 34 relative to the housing 14 is prevented. A second radial actuating clamp or means 36 is selectively movable radially to engage the housing 14 such that axial movement of the second radial actuating means 36 relative to the housing 14 is prevented. In the embodiment shown, the radial actuating means 34 and 36 engage the outer housing member 20; however, a reversed configuration with engagement of the inner housing member 26 may also be used.

Axial actuating means 38 between the first and second radial actuating means 34 and 36 is selectively movable to expand and contract the axial distance between the first and second radial actuating means 34 and 36. The axial actuating mens 38 may be made of a piezoceramic material and may have a hollow cylindrical configuration, as illustrated in Figure 2. Alternatively, the axial actuating means 38 may be a plurality of axial elements 40. For example, the axial elements 40 may be three rods distributed circumferentially within the housing 14, as illustrated in Figure 3, and may be actuated independently.

The housing 14 may include additional structure, not shown, to maintain the spacing and alignment of the axial elements 40.

Retention or biasing means 42, such as a compression spring between the shoulder 43 and first radial actuator means 34, for example, may be used to maintain contact between the axial actuating means 38 and radial actuating means 34 and 36. In addition, the biasing means 42 may be designed to exert a predetermined force when the radial actuating means 34 and 36 are not clamped against the housing 14 and when the axial actuating means 38 is contracted to its minimum axial length. Alternatively, the biasing means 42 may be omitted and the axial actuating means 38 may be bonded or otherwise fixed to the radial actuating means 34 and 36 to maintain the desired contact.

To increase the preload force on the preloaded bearings 10 and 12, the first radial actuating means 34 is moved radially into engagement with the housing 14 such that axial movement of the first radial actuating means relative to the housing 14 is prevented, and the second radial actuating means 36 is moved out of engagement with the housing 14 such that axial movement of the second radial actuating means 36 relative to the housing 14 is not prevented. Subsequently, the axial actuating means 38 is expanded such that the axial distance between the first and second radial actuating means 34 and 36 is increased. Next, the second radial actuating means 36 is moved radially into engagement with the housing 14 such that axial movement of the second radial actuating means 36 relative to the housing 14 is prevented. Then, the first radial actuating means 34 is moved radially out of engagement with the housing 14 such that axial movement of the first radial actuating means 34 relative to the housing is not prevented. Next, the axial actuating means 38 is contracted such that the axial distance between first and second radial actuating means is decreased. By repeating this sequence through multiple iterations, the preload can be increased as much as desired, even though each individual stroke of the axial actuating means 38 may be small.

To decrease the preload force on the preloaded bearings 10 and 12, the process is reversed. That is, when the first radial actuating means 34 is clamped against the housing 14 and the second radial actuating means 36 is free to move relative to the housing 14, the axial actuating means 38 is contracted such that the axial distance between the first and second radial actuating means 36 is decreased. Next, the second radial actuating means 36 is clamped against the housing 14 and the first radial actuating means 34 is unclamped while the axial actuating means 38 is expanded such that the distance between the first and second radial actuating means is increased. Again, the sequence is repeated through multiple iterations, each decreasing the preload a small amount, until the desired preload is reached.

The process of increasing or decreasing the preload can be considered to be a form of walking along the housing in a series of one-legged steps, or a movement similar to that of an inchworm. Controlling the preload can be done by counting the steps taken by the axial actuator or by adding a load monitor for direct reading of the preload to provide feedback. If multiple axial actuators are used as illustrated in Figure 3, a load monitor may be added for each axial actuator element to allow feedback control of each axial actuator separately to ensure that the preload is balanced along the circumference of the preloaded bearings.

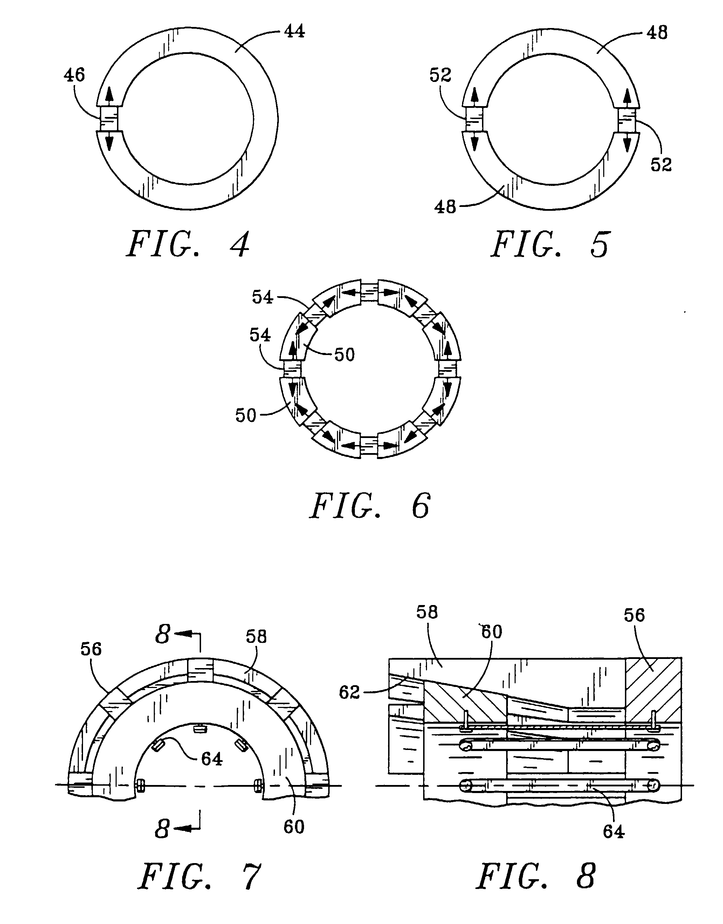

The simplest configuration for the radial actuator means 34 and 36 is a uniform ring. Alternatively, many variations that expand or contract against the housing 14 may be used, of which a few are illustrated in Figures 4 to 8. Figure 4 illustrates a split ring 44 with a linear actuator 46. Figures 5 and 6 illustrate multiple segments 48 and 50 separated by linear actuators 52 and 54, respectively. The engaging surfaces of the housing 14 and radial actuator means 34 and 36 may be grooved or otherwise configured to resist axial sliding movement.

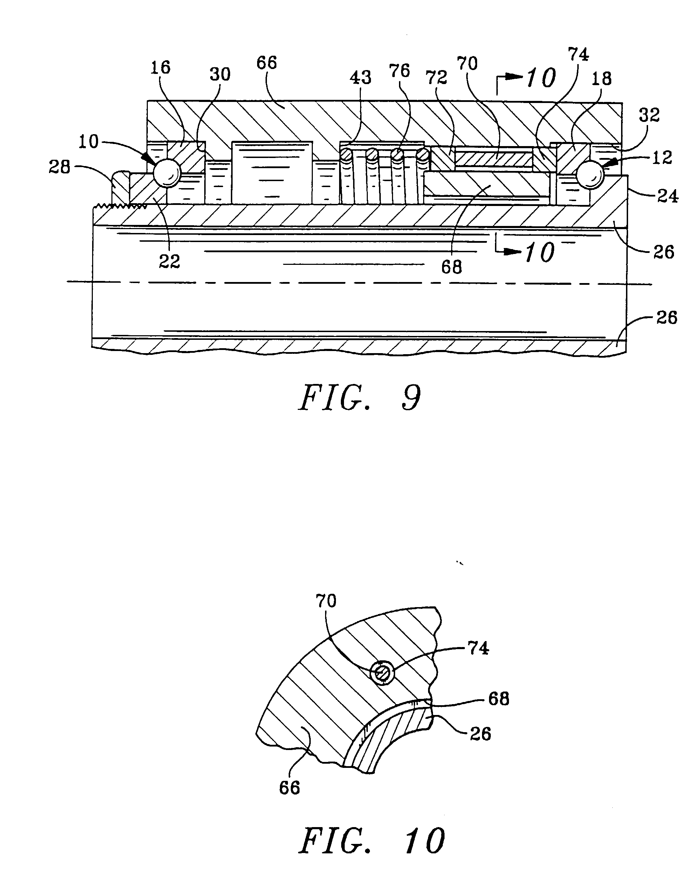

Figures 7 and 8 illustrate another configuration for the radial actuator means 34 and 36 comprising a collet-like device. A slotted ring 56 includes slots that form fingers 58. As a wedge ring 60 is forced axially against conical surfaces 62 of fingers 58 by contracting links 64 or another contracting device, the fingers 58 are spread radially outward against the housing 14. The contracting links 64 may be made of titanium-nickel (shape memory) alloy or another contracting material.

Figures 9 and 10 illustrate a further embodiment similar to that of Figures 1 and 3 but including additional housing structure and a different form of radial actuating means. The outer housing member 66 is similar to the outer housing member 20 of Figure 1, including the shoulders 30 and 43 and cylindrical inner surface 32. In addition, the outer housing member 66 includes a reduced inner diameter portion 68 having a plurality of longitudinal bores, each receiving one axial actuating element 70 and radial actuating means 72 and 74. In this embodiment, the radial actuating means may be cylindrical and may engage the respective longitudinal bore of the housing over the cylindrical surface of the radial actuating means, not merely in the radial directions. The axial actuating element 70 may be fixed to the radial actuating means 72 and 74 or may be maintained in contact with those elements by an optional preload spring 76.

Although the apparatus has particular advantages when used with piezoelectric axial actuators with short strokes, other types of axial actuators such as those using magnetostrictive, titanium-nickel (shape memory) alloys, and thermopolymer materials, for example, may also be used. Similarly, the radial actuating means 34 and 36 may use magnetostrictive, titanium-nickel (shape memory) alloys, thermopolymer materials and other mechanisms in addition to piezoelectric materials to effect the desired clamping. Preferably, each of the actuating means is electrically activated.

It will be appreciated that the apparatus for adjusting the preload of preloaded bearings is not limited by a short single stroke of an axial actuator. The apparatus uses iterations to overcome effects of thermal expansion and control preload for variations in rotational speed and other parameters. The apparatus may be used continually to monitor and control preload during operation of the machine spindle or other device. And, unlike many spring and hydraulic mechanisms for controlling preload, the present apparatus results in uniform axial stiffness in both axial directions.

## Claims

1. A preload adjustment apparatus for use with preloaded bearings (10, 12) mounted within a housing (14), characterised by a first radial actuating means (34) for selective radial engagement with the housing (14) such that axial movement of the first radial actuating means (34) relative to the housing is prevented; second radial actuating means (36) for selective radial engagement with the housing (14) such that axial movement of the second radial actuating means (36) relative to the housing is prevented; axial actuating means (38) between the first and second radial actuating means (34, 36) for selective expansion and contraction of the axial distance between the first and second radial actuating means; and retention means (42) for maintaining contact between the axial actuating means and the first radial actuating means and the second radial actuating means.

2. An apparatus according to claim 1, wherein the first and second radial actuating means (34, 36) are movable radially outwardly to prevent movement of the first and second radial actuating means relative to the housing (14).

3. An apparatus according to claim 1 or 2, wherein at least one of the bearings (10, 12) is slidably movable in the housing (14).

4. An apparatus according to claim 1, 2 or 3, wherein the retention means (42) is a compression spring providing minimum preload.

5. An apparatus according to any one of the preceding claims, wherein the axial actuating means (38) has a tubular configuration and is positioned about an axis of the bearings (10, 12).

6. An apparatus according to any one of claims 1-4, wherein the first and second radial actuating means (34, 36) are annular and the axial actuating means (38) comprises a plurality of axial elements distributed along the circumference of the first and second radial actuating means.

7. An apparatus according to any one of the preceding claims, wherein at least a portion of the axial actuating means (38) is made of a piezoelectric material.

8. An apparatus according to any one of the preceding claims, wherein at least a portion of the first and second radial actuating means (34, 36) is made of a piezoelectric material.

9. An apparatus according to any one of the preceding claims, wherein the axial actuating means is fixed to the first and second radial actuating means such that contact between the axial actuating means and the first and second radial actuating means is maintained.

10. A method for adjusting the preload of preloaded bearings (10, 12) mounted within a housing (14), characterised by radially moving a first radial actuating means (34) into engagement with the housing (14) such that axial movement of the first radial actuating means relative to the housing is prevented; changing the axial length of an axial actuating means (38) between the first and a second radial actuating means (34, 36) such that the axial distance between the first and second radial actuating means is changed; radially moving the second radial actuating means (36) into engagement with the housing (14) such that axial movement of the second radial actuating means relative to the housing is prevented; radially moving the first radial actuating means (34) out of engagement with the housing such that axial movement of the first radial actuating means relative to the housing is not prevented; and changing the axial length of the axial actuating means between the first and second radial actuating means such that the axial distance between the first and second radial actuating means is changed.

11. A method according to claim 10, further comprising biasing one of the first and second radial actuating means (34, 36) against the axial actuating means (38) such that a minimum preload is maintained.

12. A method according to claim 10 or 11, further comprising attaching the axial actuating means (38) to the first and second radial actuating means such that contact is maintained between the axial actuating means and the first and second radial actuating means.

13. A method according to claim 10, 11 or 12, wherein the steps are repeated until a predetermined preload is achieved.

14. A method according to any one of claims 10 to 13, wherein the radial movement of the first and second radial actuating means to effect engagement with the housing is radially outward.

15. A method according to any one of claims 10 to 14, wherein at least one of the preloaded bearings (10, 12) is slidably movable relative to the housing (14).

16. A method according to any one of claims 10 to 15, wherein the retention means (42) is a compression spring and provides a minimum preload on the preloaded bearings (10, 12).

17. A method according to any one of claims 10 to 16, wherein the axial actuating means is tubular and is positioned about an axis of the bearings (10, 12).

18. A method according to any one of claims 10 to 16, wherein the first and second radial actuating means (34, 36) are annular and the axial actuating means (38) comprises a plurality of axial elements spaced circumferentially along the radial actuating means.

19. A method according to claim 18, wherein the axial elements are movable independently.

## Patentansprüche

1. Einrichtung zum Einstellen einer Vorspannung zur Verwendung mit vorgespannten Lagern (10, 12), die innerhalb eines Gehäuses (14) angebracht sind, **gekennzeichnet durch** ein erstes radiales Betätigungsmittel (34) für einen wahlweisen radialen Eingriff mit dem Gehäuse (14) derart, daß eine axiale Bewegung des ersten radialen Betätigungsmittels (34) relativ zu dem Gehäuse verhindert ist; ein zweites radiales Betätigungsmittel (36) für einen wahlweisen radialen Eingriff mit dem Gehäuse (14) derart, daß eine axiale Bewegung des zweiten radialen Betätigungsmittels (36) relativ zu dem Gehäuse verhindert ist; ein axiales Betätigungsmittel (38) zwischen den ersten und zweiten radialen Betätigungsmitteln (34, 36) für ein wahlweises Ausdehnen und Vermindern des axialen Abstands zwischen den ersten und zweiten radialen Betätigungsmitteln; und ein Haltemittel (42) zum Aufrechterhalten der Berührung zwischen dem axialen Betätigungsmittel und dem ersten radialen Betätigungsmittel und dem zweiten radialen Betätigungsmittel.

2. Einrichtung nach Anspruch (1), bei der die ersten und zweiten radialen Betätigungsmittel (34, 36) radial nach außen bewegbar sind, um eine Bewegung der ersten und zweiten radialen Betätigungsmittel relativ zu dem Gehäuse (14) zu verhindern.

3. Einrichtung nach Anspruch 1 oder 2, bei der wenigstens eines der Lager (10, 12) gleitfähig in dem Gehäuse (14) bewegbar ist.

4. Einrichtung nach Anspruch 1, 2 oder 3, bei der das Haltemittel (42) eine Druckfeder ist, die eine minimale Vorspannung liefert.

5. Einrichtung nach einem der vorhergehenden Ansprüche, bei der das axiale Betätigungsmittel (38) eine rohrförmige Gestalt hat und um eine Achse der Lager (10, 12) herum angeordnet ist.

6. Einrichtung nach einem der Ansprüche 1 bis 4, bei der die ersten und zweiten radialen Betätigungsmittel (34, 36) ringförmig sind und das axiale Betätigungsmittel (38) eine Vielzahl von axialen Elementen aufweist, die längs des Umfangs der ersten und zweiten radialen Betätigungsmittel verteilt sind.

7. Einrichtung nach einem der vorhergehenden Ansprüche, bei der wenigstens ein Teil des axialen Betätigungsmittels (38) aus einem piezoelektrischen Material hergestellt ist.

8. Einrichtung nach einem der vorhergehenden Ansprüche, bei der wenigstens ein Teil der ersten und zweiten radialen Betätigungsmittel (34, 36) aus einem piezoelektrischen Material hergestellt ist.

9. Einrichtung nach einem der vorhergehenden Ansprüche, bei der das axiale Betätigungsmittel an den ersten und zweiten radialen Betätigungsmitteln derart befestigt ist, daß eine Berührung zwischen dem axialen Betätigungsmittel und den ersten und zweiten radialen Betätigungsmitteln aufrecht erhalten wird.

10. Verfahren zum Einstellen der Vorspannung von vorgespannten Lagern (10, 12), die innerhalb eines Gehäuses (14) angebracht sind, **gekennzeichnet durch** radiales Bewegen eines ersten radialen Betätigungsmittels (34) in Eingriff mit dem Gehäuse (14) derart, daß eine axiale Bewegung des ersten radialen Betätigungsmittels relativ zu dem Gehäuse verhindert ist; Verändern der axialen Länge eines axialen Betätigungsmittels (38) zwischen dem ersten und einem zweiten radialen Betätigungsmittel (34, 36) derart, daß der axiale Abstand zwischen den ersten und zweiten radialen Betätigungsmitteln verändert wird; radiales Bewegen des zweiten radialen Betätigungsmittels (36) in Eingriff mit dem Gehäuse (14) derart, daß eine axiale Bewegung des zweiten radialen Betätigungsmittels relativ zu dem Gehäuse verhindert ist; radiales Bewegen des ersten radialen Betätigungsmittels (34) außer Eingriff mit dem Gehäuse derart, daß eine axiale Bewegung des ersten radialen Betätigungsmittels relativ zu dem Gehäuse nicht verhindert ist; und Verändern der axialen Länge des axialen Betätigungsmittels zwischen den ersten und zweiten radialen Betätigungsmitteln derart, daß der axiale Abstand zwischen den ersten und zweiten radialen Betätigungsmitteln verändert wird.

11. Verfahren nach Anspruch 10, bei dem ferner eines der ersten und zweiten radialen Betätigungsmittel (34, 36) gegen das axiale Betätigungsmittel (38) derart vorgespannt wird, daß eine minimale Vorspannung aufrecht erhalten wird.

12. Verfahren nach Anspruch 10 oder 11, bei dem ferner das axiale Betätigungsmittel (38) mit den ersten und zweiten radialen Betätigungsmitteln derart verbunden wird, daß eine Berührung zwischen dem axialen Betätigungsmittel und den ersten und zweiten radialen Betätigungsmitteln aufrecht erhalten wird.

13. Verfahren nach Anspruch 10, 11 oder 12, bei dem die Schritte wiederholt werden, bis eine vorbestimmte Vorspannung erreicht ist.

14. Verfahren nach einem der Ansprüche 10 bis 13, bei dem die radiale Bewegung der ersten und zweiten radialen Betätigungsmittel zum Bewirken eines Eingriffs mit dem Gehäuse radial nach außen gerichtet ist.

15. Verfahren nach einem der Ansprüche 10 bis 14, bei dem wenigstens eines der vorgespannten Lager (10, 12) relativ zu dem Gehäuse (14) gleitfähig bewegbar ist.

16. Verfahren nach einem der Ansprüche 10 bis 15, bei dem das Haltemittel (42) eine Druckfeder ist und eine minimale Vorspannung auf die vorgespannten Lager (10, 12) schafft.

17. Verfahren nach einem der Ansprüche 10 bis 16, bei dem das axiale Betätigungsmittel rohrförmig ist und um eine Achse der Lager (10, 12) herum angeordnet ist.

18. Verfahren nach einem der Ansprüche 10 bis 16, bei dem die ersten und zweiten radialen Betätigungsmittel (34, 36) ringförmig sind und das axiale Betätigungsmittel (38) eine Vielzahl von axialen Elementen aufweist, die in Umfangsrichtung längs der radialen Betätigungsmittel mit Abstand voneinander angeordnet sind.

19. Verfahren nach Anspruch 18, bei dem die axialen Elemente unabhängig voneinander bewegbar sind.

## Revendications

1. Appareil d'ajustement d'une charge préalable, destiné à être utilisé avec des paliers (10, 12) soumis à une charge préalable et montés dans un boîtier (14), caractérisé par un premier dispositif (34) de manoeuvre radiale destiné à être en contact radial sélectif avec le boîtier (14) afin qu'un déplacement axial du premier dispositif (34) de manoeuvre radiale par rapport au boîtier soit empêché, un second dispositif (36) de manoeuvre radiale destiné à être en contact radial sélectif avec le boîtier (14) afin qu'un déplacement axial du second dispositif (36) de manoeuvre radiale par rapport au boîtier soit empêché, un dispositif (38) de manoeuvre axiale placé entre le premier et le second dispositif (34, 36) de manoeuvre radiale et destiné à augmenter et réduire sélectivement la distance axiale comprise entre le premier et le second dispositif de manoeuvre radiale, et un dispositif de retenue (42) destiné à maintenir le contact entre le dispositif de manoeuvre axiale et le premier dispositif de manoeuvre radiale et le second dispositif de manoeuvre radiale.

2. Appareil selon la revendication 1, dans lequel le premier et le second dispositif de manoeuvre radiale (34, 36) sont mobiles radialement vers l'extérieur pour empêcher un déplacement du premier et du second dispositif de manoeuvre radiale vers le boîtier (14).

3. Appareil selon la revendication 1 ou 2, dans lequel l'un au moins des paliers (10, 12) est mobile par coulissement dans le boîtier (14).

4. Appareil selon la revendication 1, 2 ou 3, dans lequel le dispositif de retenue (42) est un ressort de compression donnant une charge préalable minimale.

5. Appareil selon l'une quelconque des revendications précédentes, dans lequel le dispositif de manoeuvre axiale (38) a une configuration tubulaire et est positionné autour d'un axe des paliers (10, 12).

6. Appareil selon l'une quelconque des revendications 1 à 4, dans lequel le premier et le second dispositif (34, 36) de manoeuvre radiale sont annulaires et le dispositif (38) de manoeuvre axiale comprend plusieurs éléments axiaux répartis à la circonférence du premier et du second dispositif de manoeuvre radiale.

7. Appareil selon l'une quelconque des revendications précédentes, dans lequel une partie au moins du dispositif de manoeuvre axiale (38) est formée d'un matériau piézoélectrique.

8. Appareil selon l'une quelconque des revendications précédentes, dans lequel une partie au moins du premier et du second dispositif (34, 36) de manoeuvre radiale est formée d'un matériau piézoélectrique.

9. Appareil selon l'une quelconque des revendications précédentes, dans lequel le dispositif de manoeuvre axiale est fixé aux premier et second dispositifs de manoeuvre radiale afin que le contact entre le dispositif de manoeuvre axiale et le premier et le second dispositif de manoeuvre radiale soit maintenu.

10. Procédé d'ajustement de la charge préalable de paliers (10, 12) soumis à une charge préalable et montés dans un boîtier (14), caractérisé par le déplacement radial d'un premier dispositif (34) de manoeuvre radiale au contact du boîtier (14) afin que le déplacement axial du premier dispositif de manoeuvre radiale par rapport au boîtier soit empêché, le changement de longueur axiale d'un dispositif (38) de manoeuvre axiale entre le premier et le second dispositif (34, 36) de manoeuvre radiale afin que la distance axiale comprise entre le premier et le second dispositif de manoeuvre radiale soit modifiée, le déplacement radial du second dispositif (36) de manoeuvre radiale au contact du boîtier (14) afin que le déplacement axial du second dispositif de manoeuvre radiale par rapport au boîtier soit empêché, le déplacement radial du premier dispositif (34) de manoeuvre radiale à distance du boîtier afin que le déplacement axial du premier dispositif de manoeuvre radiale par rapport au boîtier ne soit pas empêché, et le changement de la longueur axiale du dispositif de manoeuvre axiale entre le premier et le second dispositif de manoeuvre radiale afin que la distance axiale comprise entre le premier et le second dispositif de manoeuvre radiale soit modifiée.

11. Procédé selon la revendication 10, comprenant en outre le rappel de l'un des premier et second dispositifs (34, 36) de manoeuvre radiale contre le dispositif (38) de manoeuvre axiale afin qu'une charge préalable minimale soit maintenue.

12. Procédé selon la revendication 10 ou 11, comprenant en outre la fixation du dispositif (38) de manoeuvre axiale aux premier et second dispositifs de manoeuvre radiale afin que le contact soit maintenu entre le dispositif de manoeuvre axiale et les premier et second dispositifs de manoeuvre radiale.

13. Procédé selon la revendication 10, 11 ou 12, dans lequel les étapes sont répétées jusqu'à ce qu'une charge préalable prédéterminée soit obtenue.

14. Procédé selon l'une quelconque des revendications 10 à 13, dans lequel le déplacement radial du premier et du second dispositif de manoeuvre radiale provoquant le contact avec le boîtier s'effectue radialement vers l'extérieur.

15. Procédé selon l'une quelconque des revendications 10 à 14, dans lequel l'un au moins des paliers (10, 12) soumis à une charge préalable est mobile par coulissement par rapport au boîtier (14).

16. Procédé selon l'une quelconque des revendications 10 à 15, dans lequel le dispositif de retenue (42) est un ressort de compression et donne une charge préalable minimale appliquée aux paliers (10, 12) soumis à la charge préalable.

17. Procédé selon l'une quelconque des revendications 10 à 16, dans lequel le dispositif de manoeuvre axiale est tubulaire et est positionné autour d'un axe des paliers (10, 12).

18. Procédé selon l'une quelconque des revendications 10 à 16, dans lequel le premier et le second dispositif (34, 36) de manoeuvre radiale sont annulaires et le dispositif (38) de manoeuvre axiale comprend plusieurs éléments axiaux espacés circonférentiellement le long du dispositif de manoeuvre radiale.

19. Procédé selon la revendication 18, dans lequel les éléments axiaux sont mobiles indépendamment.
